# EUROPEAN PATENT SPECIFICATION

(11) **EP 0 232 890 B1**
(45) Date of publication and mention of the grant of the patent: **24.11.1993**
(21) Application number: 87101786.9
(22) Date of filing: 10.02.1987
(51) Int. Cl.: G01S 7/48, G01P 21/02

(54) **Speed simulator for doppler laser speedometer**
Geschwindigkeitssimulator für Dopplerlasergeschwindigkeitsmessgerät
Simulateur de vitesse pour indicateur de vitesse à laser avec mesure de l'effet doppler

(30) Priority: 13.02.1986 IT 4765286
(43) Date of publication of application: 19.08.1987
(73) Proprietor: SELENIA INDUSTRIE ELETTRONICHE ASSOCIATE S.p.A., I-00131 Roma (IT)
(72) Inventor: Liberati, Fabrizio, I-00157 Roma (IT); Penco, Eugenio, I-00186 Roma (IT); Vietri, Gabriella, I-8127 Napoli (IT)
(74) Representative: Gustorf, Gerhard, Dipl.-Ing.

(56) References cited:
- US-A- 3 142 059
- US-A- 4 176 950
- PATENT ABSTRACTS OF JAPAN, vol. 8, no. 257 (P-316)[1694], 24th November 1984; & JP-A-59 126 976 (HITACHI SEISAKUSHO K.K.) 21-07-1984

## Description

The invention relates to a speed simulator for a Doppler laser speedometer, used for testing and calibrating such speedometers.

In a speed simulator for Doppler laser speedometer, the beam passes a rotating diffusive surface shaped so as to uniformly and periodically vary the optical path, simulates an object which moves at constant speed, therefore giving way to a constant frequency shift due to Doppler effect in the retrodiffused laser beam (US-4,176,950).

Doppler laser speedometers measure the frequency shift due to Doppler effect induced into the laser beam delivered by the speedometer and reflected by a moving target, consisting e.g. of solid particles floating in a fluid current or of aircrafts, cars or similar items.

To test or calibrate a speedometer, an equipment simulating a known constant speed in the direction of the laser beam, periodically reversible to limit its dimensions is required. Furthermore, it would be desirable to simulate speeds in a wide range of values. This invention satisfies these requirements and it provides for an innovative approach to test and calibrate Doppler effect laser speedometers by simulating a constant speed target.

It is an object of this invention to provide a method and an equipment which can induce a frequency shift onto the laser beam of a Doppler effect laser speedometer to simulate target speeds with a constant component in the direction of the beam and periodically reversible.

To this end the invention, which is defined in claim 1, provides for a cylindroid revolving around its axis presenting a surface upon which the laser beam impinges, inclined with respect to the cylindroid axis and suitably shaped, causing laser beam optical path variations which are such as to simulate a target moving linearly, at constant speed, in the direction of the laser beam.

The amount of frequency shift is a function of the known rate of change of the optical path. The frequency shift measured by the speedometer (velocimeter) is compared with the shift calculated on the basis of mechanical characteristics of the simulator for calibration purposes.

Many equipments, such as sanded disks and mirrors fitted to loudspeakers have been tested and found suitable. Other systems have been studied, but have been found difficult to implement from a mechanical and optical viewpoint (Franke US-4,176,950).

The invention will now be described with reference to one of its presently preferred forms of execution, which is reported for illustration purposes without being confined to it, with reference to the drawings enclosed:
- Figure 1: is the operating system schematically illustrated,
- Figure 2: shows the lateral surface of the cylindroid and the cylindroid itself,
- Figure 3: shows the position taken by the cylindroid shaped surface at different time intervals during rotation,
- Figure 4: shows the change of shape of the optical path as the mechanical parameters vary.

When this invention is used together with a Doppler effect laser speedometer to simulate the speed of a target having a constant rectilinear motion, the laser beam impinging on the edge of the surface inclined with respect to the cylindroid axis and suitably shaped, is diffused, and the component diffused in the laser beam direction undergoes a frequency shift by a known amount. This invention changes a uniform circular motion easily available through a conventional motor into a linear time variation of the optical path of the retrodiffused laser beam.

To obtain a constant frequency shift during a full turn of the cylindroid, we must have a linear variation of the optical path which is also reversible to limit its size. The cylindroid profile is obtained by shifting a sinusoidal segment perpendicular to the cylinder axis. The model made by us was obtained shaping it with a numerically controlled mill.

### System structure and operation based upon figures:

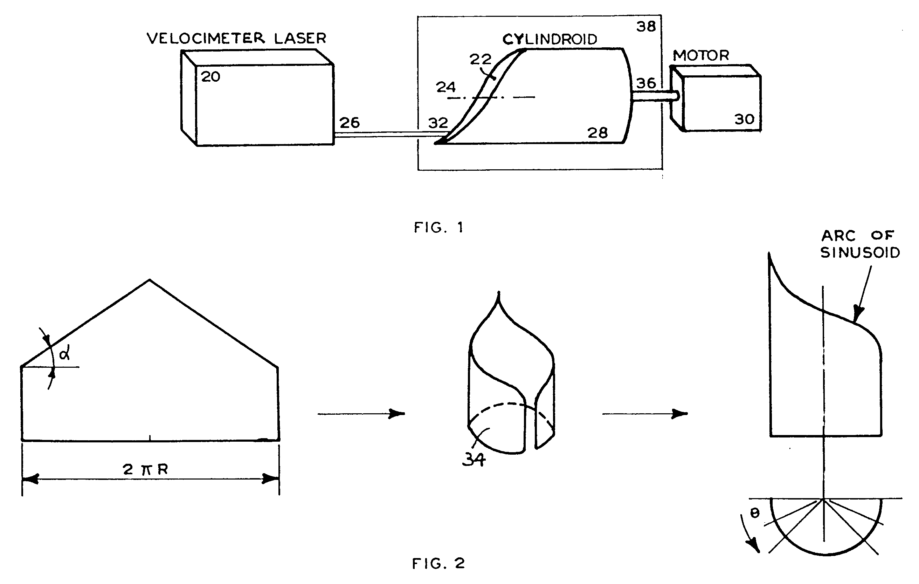

Figure 1 shows the operating schematic of this invention with reference to one of its forms of implementation presently preferred.

The laser beam 26, exiting Doppler effect laser speedometer 20, intercepts the border of surface 22 of cylindroid 28 which rotates around its axis 24, parallel to laser beam 26. Laser beam 26 intercepts the edge of surface 22 at point 32. Surface 22 is made diffusive by applying, if required, a layer of diffusing material for the wavelength of the laser in question. The speed simulator may be used for any wavelength by changing the diffusive layer material and not the material making up the cylindroid itself, which is usually opaque to that wavelength. Therefore the cylindrioid material may be selected on the basis of sole mechanical and not optical requirements. Cylindroid 28 is eccentric due to its asymmetric distribution of mass along its axis, which may cause vibrations, which may be eliminated by bearings, and if the rotation axis 24 is horizontal , it may also introduce non uniform angular speeds, which may be attenuated to the extent required by adopting a flywheel or suitable balancing masses.

Figure 2 shows the development of lateral surface 22 of cylindroid 28 and position of point 32 in the direction of the laser beam as a function of different angles.

Cylindroid 28 is symmetrical about plane 38 crossing its axis. Intersection of plane 38 with surface 22 is a sinusoidal segment. In each of the two parts into which symmetry plane 38 splits cylindroid 28, the movement of point 32 in the laser beam direction 26 is directly proportional to angle ϑ. Such movement increases in one semiperiod and decreases in the other. It is also linear in time if the cylindroid rotating speed is constant, as can be seen graphically in figure 2 where equal angles give equal displacements of point 32 in the direction of laser beam 26.

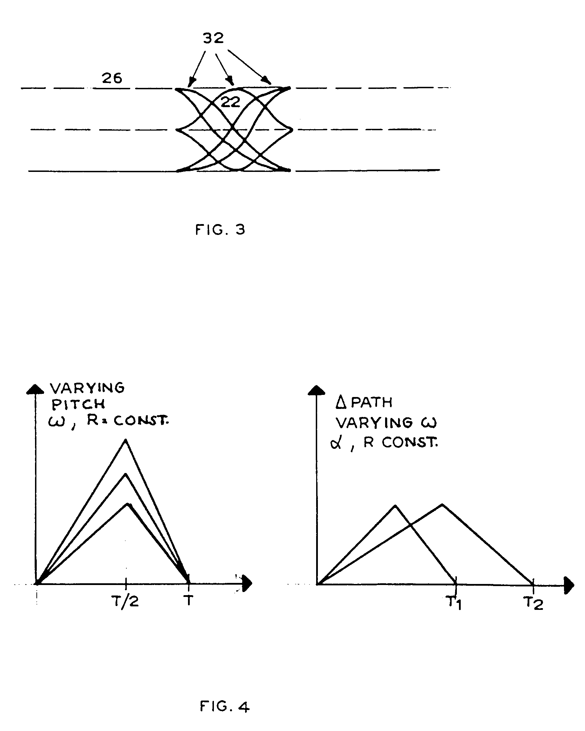

Figure 3 shows the position of point 32 on the edge of surface 22 which intercepts laser beam 26 at three successive time intervals equally spaced within a period quarter.

Figure 4 shows the difference in optical path obtained by varying the pitch angle α of the shaped surface of the cylindroid keeping constant angular speed ω and radius R of cylindroid and the same variation when the angular speed ω is varied and α and R are kept constant.

## Claims

1. Speed simulator for Doppler effect laser speedometer (20) in which a constant speed of an object is simulated by obtaining a predetermined frequency shift of the laser beam, characterized by means for obtaining a retrodiffusion of the laser beam (26) said means comprising a cylindroid (28) rotating around its longitudinal axis (24) and being arranged in use such that the laser beam (26) runs parallel to said axis (24) and intercepts a diffusing edge portion of an end surface (22) of the cylindroid (28), said end surface being inclined relative to said axis (24) and being shaped such that the length of the optical path of said laser beam (26) varies linearly and periodically.

2. Speed simulator as set forth in claim 1, wherein said end surface (22) has a profile in the form of half a sinusoidal wave, the zero crossover point of the half wave being on said axis (24).

3. Speed simular as set forth in claim 1, wherein said end surface (22) is a plane surface which is inclined with respect to said axis (24).

4. Speed simulator as set forth in claim 3, wherein the inclination (2) of said plane surface is variable.

5. Speed simulator as set forth in anyone of the preceding claims, wherein the angular speed (ω) of the rotating cylindroid (28) is variable.

## Patentansprüche

1. Geschwindigkeitssimulator für einen Laser-Geschwindigkeitsmesser (20) mit Dopplereffekt, in welchem eine konstante Geschwindigkeit eines Objektes simuliert wird, indem eine vorbestimmte Frequenzverschiebung eines Laserstrahles erzeugt wird, gekennzeichnet durch Mittel zur Retrodiffusion des Laserstrahls (26), welche einen elliptischen Zylinder (28) aufweisen, der um seine Längsachse (24) rotiert und im Betrieb so angeordnet ist, daß der Laserstrahl (26) parallel zu dieser Achse (24) verläuft und einen zerstreuenden Kantenbereich einer Endfläche (22) des elliptischen Zylinders (28) abschneidet, wobei diese Endfläche (22) schräg zu der Längsachse (24) verläuft und so geformt ist, daß sich die Länge des optischen Weges des Laserstrahls (26) linear und periodisch verändert.

2. Geschwindigkeitssimulator nach Anspruch 1, dadurch gekennzeichnet, daß die Endfläche (22) im Profil die Form einer halben Sinuswelle hat, deren Null-Durchlaufpunkt auf der Längsachse (24) liegt.

3. Geschwindigkeitssimulator nach Anspruch 1, dadurch gekennzeichnet, daß die Endfläche (22) eine ebene Fläche ist, die zur Längsachse (24) geneigt ist.

4. Geschwindigkeitssimulator nach Anspruch 3, dadurch gekennzeichnet, daß die Neigung der ebenen Endfläche (22) variabel ist.

5. Geschwindigkeitssimulator nach einem der vorhergehenden Ansprüche, dadurch gekennzeichnet, daß die Winkelgeschwindigkeit (ω) des rotierenden, elliptischen Zylinders (28) veränderbar ist.

## Revendications

1. Simulateur de vitesse pour un indicateur de vitesse (20) à laser à effet Doppler dans lequel une vitesse constante d'un objet est simulée en obtenant un décalage de fréquence prédéterminé du faisceau laser, caractérisé par un moyen d'obtention d'une rétrodiffusion du faisceau laser (26), ledit moyen comprenant un cylindroïde (28) tournant autour de son axe longitudinal (24) et agencé en utilisation d'une manière telle que le faisceau laser (26) court parallèlement audit axe (24) et intercepte une partie de bord diffusante d'une surface d'extrémité (22) du cylindroïde (28), ladite surface d'extrémité étant inclinée par rapport audit axe (24) et étant formée d'une manière telle que la longueur du trajet optique dudit faisceau laser (26) varie de façon linéaire et périodique.

2. Simulateur de vitesse selon la revendication 1, dans lequel ladite surface d'extrémité (22) a un profil en forme d'une demi-onde sinusoïdale, le point de croisement à l'origine de la demi-onde étant sur ledit axe (24).

3. Simulateur de vitesse selon la revendication 1, dans lequel ladite surface d'extrémité (22) est une surface plane qui est inclinée par rapport audit axe (24).

4. Simulateur de vitesse selon la revendication 3, dans lequel l'inclinaison (2) de ladite surface plane est variable.

5. Simulateur de vitesse selon l'une quelconque des revendications précédentes, dans lequel la vitesse angulaire (ω) du cylindroïde rotatif (28) est variable.
